(19) **Europäisches Patentamt**

**European Patent Office**

**Office européen des brevets**

(11) **EP 1 303 152 B1**

(12) **EUROPEAN PATENT SPECIFICATION**

(45) Date of publication and mention
of the grant of the patent:
**22.12.2004 Bulletin 2004/52**

(51) Int Cl.$^7$: **H04Q 7/32**

(21) Application number: **01830654.8**

(22) Date of filing: **16.10.2001**

(54) **Method of monitoring signals among communication systems operating according to different time scales**

Verfahren zur Beobachtung von Signalen zwischen Kommunikationssystemen, die entsprechend unterschiedlicher Zeitraster operieren

Méthode de surveillance de signaux parmi des systèmes de communication fonctionnant selon différentes échelles de temps

(84) Designated Contracting States:
**AT BE CH CY DE DK ES FI FR GB GR IE IT LI LU MC NL PT SE TR**

(43) Date of publication of application:
**16.04.2003 Bulletin 2003/16**

(73) Proprietor: **Siemens Mobile Communications S.p.A.**
**20126 Milano (IT)**

(72) Inventors:
• **De Benedittis, Rossella**
**20137 Milano (IT)**

• **Durastante, Gianluca**
**20016 Pero (IT)**

(74) Representative: **Giustini, Delio**
**Siemens Information and Communication Networks S.p.A.,**
**Palazzo Gorky**
**Via Monfalcone, 1**
**20092 Cinisello Balsamo (IT)**

(56) References cited:
**WO-A-00/27150**          **WO-A-97/25827**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Field of the Invention

The present invention relates to digital communication systems, and more particularly it concerns a method of monitoring, at a receiving unit belonging to a system operating according to a first time scale, signals emitted by a transmitting unit belonging to a system operating according to a time scale different from and asynchronous with respect to the first one.

In communications systems the need often arises, for a unit engaged in a particular service, to acquire certain information from other units without stopping the ongoing service. For instance, in mobile communication systems, a receiving unit (either mobile equipment or fixed equipment like a base station) has also to monitor a plurality of transmitting units to acquire data transmitted by the latter units according to a predetermined rule: e. g., a unit in a cell has to periodically monitor the adjacent cells to acquire information about their identities, their transmission powers, etc. Time periods available to perform such acquisitions are referred to as idle windows or idle periods. For instance, a single synthesiser receiving unit being in connected mode can devote to these measurements all time periods not allotted to the normal traffic data transfer.

The receiving (or monitoring) unit and the transmitting (monitored) units may belong to systems based on different technologies. If, as is the case for digital communication systems, the signals in the different systems are organised according to periodically repeating frames, the data to be acquired generally have different frame structures of that used by the monitoring unit, as concerns frame duration, number of time slots per frame, time slot size and frame starting times. Consequently, the position of the data to be acquired relative to the frame structure of the monitoring unit cannot be previously known. Thus, a first problem is organising the idle windows in the frames of the monitoring unit so as efficiently to manage the different time scale.

If the whole of the idle periods in subsequent frames could be devoted to the search of the data looked for (continuous search), given the different recurrence rate of idle windows and looked for information, sooner or later acquisition is expected, provided that there is at least an idle window with such a length that it includes the data to be acquired. Yet, in some cases, the search is a discontinuous search, in that it must be suspended with a certain time schedule to allow the receiving unit to perform other tasks, and can be resumed once said other tasks have been completed. Thus a second issue to be faced by the invention is to manage in a smart manner a discontinuous search.

This situation occurs for instance in equipment belonging to a third generation mobile communication system (generally known as UMTS, Universal Mobile Communication System) and having handover capability to a second generation system like GSM. The receiving unit can be a TD-SCDMA/GSM (where TD-SCDMA stands for Time Division - Synchronous Code Division Multiple Access) dual mode User Equipment (UE) working in TD-SCDMA connected mode, and the transmitting units could be GSM Base Transceiver Stations (BTSs), whose Frequency Control Channel (FCCH) and Synchronisation Channel (SCH) have to be listened to in order to prepare for a TD-SCDMA to GSM handover. Moreover, for such a handover, the receiving unit has periodically to keep free a time interval in order to perform also power level measurements on adjacent TD-SCDMA/GSM cells: both the search for the FCCH/SCH channels and the power level measurements are to be carried out in the idle windows of the TD-SCDMA frames.

Background art

Solutions to the problem of detecting, at a receiving unit of a radio communication system, signals emitted by a different system have already been proposed. These proposals have been presented within 3GPP (3rd Generation Partnership Project) forum and mainly address the case of an FDD (Frequency Division Duplexing) UE monitoring GSM adjacent cells for detecting their FCCH/SCH bursts.

One proposal is contained in the document "Reduced search time for GSM synchronisation from UTRA" presented by Siemens AG at the meeting of ETSI STC SMG2 UMTS Layer 1 Expert Group, Sophia Antipolis, 9-12/11/98, Document Tdoc SMG2 UMTS-L1 566/98. The document suggests exploiting the time periodicity according to which the FCCH/SCH bursts appear in the FDD monitoring idle periods. However, this solution assumes that a continuous monitoring is performed, and thus its teaching cannot be used when a discontinuous search has to be managed, as is the case of the present invention.

The document "Downlink slotted frames for seamless handover from UTRA to GSM" presented by France Telecom at the meeting ETSI STC SMG2 UMTS-L1Number7, Stockholm, 14-16/10/98, Document Tdoc SMG2 UMTS-L1 498/98, suggests introducing downlink slotted frames in the serving system such that the detection of an entire GSM frame is guaranteed within 120 ms. As this is the requirement for a GSM handset monitoring adjacent GSM cells, the conclusion should be that soon or later, and anyway before 10 s (as required for GSM as well), the looked for FCCH/SCH burst will be detected. This solution however does not try to avoid monitoring of GSM frame configurations that can have been already monitored in previous slotted monitoring periods. This can lead to inefficiencies and to a waste of monitoring capacity, in that more slotted frames than actually needed are required.

Patent document WO 00/27150 A discloses a method for data transmission in mobile radio systems which comprises:

- transmitting data in structured form in frames from a first (UMTS) base station to a mobile station using a first (CDMA) transmission method;
- during specific transmission phases interruption phases are inserted, in which interruption phases the mobile station interrupts the reception of the data sent from the first base station and/or the processing of the received data, and in which interruption phases the mobile station is switched to receive data packets which are sent from a second base station (GSM) using a second method;
- depending on a reception result relating to these data packets sent from the second base station (GSM), information which influences the insertion of interruption phases is sent from the mobile station to the first base station (UMTS).

Data packets sent from the GSM base station to the mobile station may also be synchronization data packets SCH which are to be detected, or frequency-correction data packets FCCH. The purpose of the method is to reduce the number of interruption phases to the only ones effectively needed. To this aim the mobile station sent to the UMTS base station a message, for example "FCCH_found" which is sufficient for terminating the search of an adjacent channel with different technology. At the reception of this message, the UMTS base station restricts the insertion of further interruption phases. Accordingly to this method, the mobile station performs continuous search during subsequent idle phases but, differently from the previously mentioned prior art, the maximum possible search duration is not fixed in advance but is regulated by a feedback message. Despite the advantage, the method has not specific teaching of how avoiding to repeat unsuccessful detections in correspondence of the same relative positions of the FCCH packet inside the idle window, mainly due to the resumption of the detection process after programmed interruptions for other tasks (discontinuous search).

Summary and object of the invention

According to the invention there is provided a method of acquiring, at a monitoring unit and by means of a discontinuous search, data from a monitored system of different technology, by efficiently using a given pool of idle periods in the frames of the monitoring unit.

As shown in the following, the present invention makes provision for resuming the suspended search at a well defined time such that some kind of memory of the previous search be held, and only (or almost only) new relative configurations between the search window and the signal to be monitored are subsequently explored.

In other words, the invention avoids searching on a time interval in which the looked for data takes, in the new measurement interval, the same relative positions as in the previous measurement interval: that is, the data aren't searched where the monitoring unit has already unsuccessfully tried to find them.

The invention here described manages a discontinuous search of the wanted data signal (e.g. the FCCH or SCH burst of a GSM system) such that it looks like a continuous search in terms of efficiency for the signal detection, but still leaves some idle periods available to perform other measurements which may be required by the serving system without the need for the monitoring system to interrupt the active connection to the detriment of the perceived quality.

To this aim, the invention exploits the different frame duration of the monitoring unit and the monitored system and the time schedule of occurrence of the data looked for. It provides the general criteria for defining the appropriate time for suspending and resuming the search, which criteria apply whatever the specific technology of the monitoring unit and/or monitored system is.

Thus, according to the invention, there is provided a method to detect at a receiving unit of a third generation cellular communication system operating according to a first time scale the content of a synchronisation burst broadcast by at least one transmitting unit of a monitored GSM system, or the like, operating according to a second time scale different from and asynchronous with respect to the first one, as described in the claims.

Brief description of the drawings

A preferred embodiment of the invention, given by way of non-limiting example and concerning its application to the detection of the FCCH/SCH GSM bursts by a TD-SCDMA/GSM dual mode user equipment, will now be described with reference to the accompanying drawings, in which:

- Fig. 1 shows the reference scenario of the invention;
- Fig. 2 shows the frame organisation at the monitoring unit, in case of the preferred application of the invention;

- Fig. 3 shows the time scheduling of the looked for signals in the preferred application of the invention;
- Fig. 4 shows the possible positions of the looked for signals with respect to the frames of the monitoring unit;
- Fig. 5 is a graphical representation of the acquisition method of the invention in case of data acquisition from a plurality of transmitting units.

Detailed description of a preferred embodiment of the invention

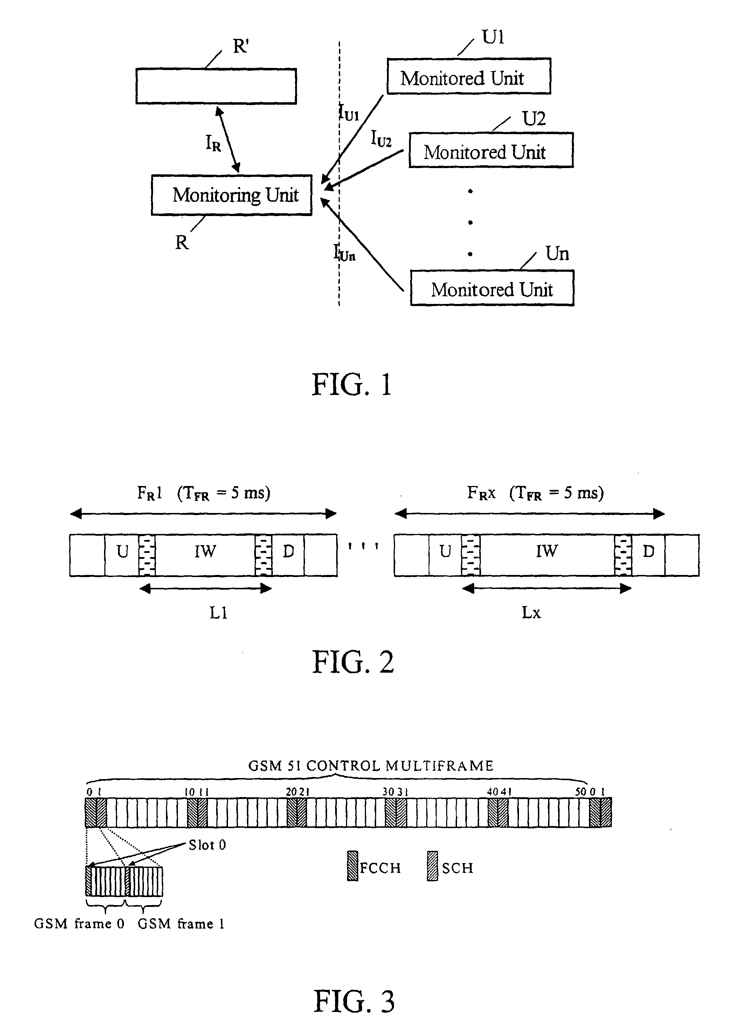

Figure 1 shows the reference scenario for the present invention. A receiving or transmitting and receiving unit R (hereinafter referred to as "monitoring unit", and so labelled in the drawing), in particular a mobile or a stationary equipment of a cellular communication system, is able to listen to a well defined frequency interval $I_R$ following a time division strategy and receives (or receives and transmits) information organised according to frames $F_R$ (see also Fig. 2) which repeat every $T_{FR}$ ms. The frames are subdivided into a number of time slots, some of which (U, D in Fig. 2) are used for communication at said frequency $I_R$ with other units of the same system, like unit R'.

Unit R has also to acquire data from one or more transmitting (or monitored) units U1, U2...Un, for instance belonging to a different system (as indicated by the vertical dashed line) and operating at respective frequencies $I_{Ui}$ (i = 1, 2...n) and using frame structures $F_{Ui}$ different from frame $F_R$. A similar need could exist also for unit R', even if no connection between unit R' and units U1...Un has been shown for sake of simplicity of the drawing. The data to be acquired from a unit Ui are assumed to be contained within a burst of length L that repeats itself on the frame $F_{Ui}$ according to a well-defined rule. Obviously, unit R must be able to switch to the carrier frequencies $I_{Ui}$ to listen to the corresponding signals.

In order to acquire those data, unit R can use within its frame $F_R$ a time interval IW (idle window or idle period) consisting of adjacent available time slots. Such interval may have lengths Li that can be different in different frames, as shown for lengths L1 and Lx of the idle windows in frames $F_R1$ and $F_Rx$ in Fig. 2. Yet, the idle window begins always at the same position in each frame. Of course, to allow acquisition of the looked for burst, at least one frame $F_Ri$ must include an idle period IW with length $L_i \geq L$. This is a necessary but not sufficient condition, as it will be discussed later on. More than one single idle window could be available within the frame $F_R$; in such a case the same reasoning can be applied to each of them.

In the exemplary embodiment of the invention described in detail here, the receiving unit R is a TD-SCDMA/GSM dual mode User Equipment (UE) working in TD-SCDMA connected mode, the transmitting units Ui are GSM Base Transceiver Stations (BTSs), and bursts B are the information transmitted on the Frequency Control Channel (FCCH) and Synchronisation Channel (SCH) of said BTSs, which channels have to be listened to in order to prepare for a TD-SCDMA to GSM handover. In this case the following numerical values apply:

- $T_{FR}$ = 5 ms,
- $T_{Ui}$ = 60/13 $\cong$ 4.615 ms;
- L = 7.5/13 $\cong$ 0.577 ms.

The values of the carrier frequencies $I_R$, $I_{Ui}$ are not of interest for the invention.

Fig. 3 shows the arrangement of the FCCH and SCH bursts during a GSM control multiframe of 51 GSM frames: five FCCH/SCH pairs are scheduled in a multiframe and are transmitted in time slots 0 of two consecutive frames (0-1, 10-11, 20-21, 30-31, and 40-41). The recurrence on the time axis of the FCCH and SCH bursts follows the same rule so that, only acquisition of one of them (e.g. FCCH) will be considered hereinafter. Should be noticed that the burst to be detected does not occur with fixed periodicity, but two subsequent bursts are separated by 10 or 11 GSM frames, depending on whether they belong or not to the same GSM control multiframe.

It is clear that, because of the different repetition rates of the idle period IW (every 5 ms) and the FCCH bursts (every either 10 60/13 ms, i.e. about 46.15 ms, or 11 60/13 ms, i.e. about 50.77 ms), these bursts will continuously slip with respect to the idle period IW.

Moreover, unit UE has to keep free a time interval of 30 to 50 ms every 240 ms for performing power level measurements on adjacent TD-SCDMA/GSM cells during idle windows, so that the search for FCCH has to be correspondingly suspended. For instance, the search and the measurements may be organised so that the whole of the idle windows of a first number N1 of consecutive TD-SCDMA frames (for an overall duration of 190 to 210 ms) form a search period, and the whole of the idle windows of a second number N2 of consecutive TD-SCDMA frames (for an overall duration of 30 to 50 ms) form a no-search period devoted to power level measurements. Note that, since the data looked for are generally at a different frequency from that used by the unit for traffic, if units R are single synthesiser units, the idle windows cannot be used in their entirety for the search and the measurements but their lengths Li have to be reduced by an amount of twice the time $T_{switch}$ needed to perform a frequency change. Periods $T_{switch}$ are shown in Fig. 2 by the dashed blocks at the beginning and the end of idle windows IW.

As said in the introduction, the invention provides an algorithm in which the search and no-search periods are arranged so that, after each suspension, the search is resumed as if no interruption actually occurred.

Assuming that that there is at least an idle period IW per frame in the monitoring system of such a length as to actually allow acquisition of the data looked for, then the algorithm goes through the following steps:

- defining, based on the monitoring and monitored technologies, the minimum repetition time (Rep_Time) of all possible configurations the looked for data assumes with respect to a given idle period (IW) available for that search in each frame of the monitoring system;
- defining the maximum number of frames N during which the monitoring system can search for the wanted signal in the available idle periods;
- perform the search of the looked for data for N frames by using the idle period IW, and then suspending the monitoring;
- resuming the monitoring process after Rep_Time;
- repeating two last steps till the acquisition of the data.

Parameters N and Rep_Time have to be aligned with the timing and the periodicity of the monitoring system. A rounding of the values will therefore be necessary. In order to minimise the required searching time the following rounding criteria are proposed:

a) Rep_Time is expressed in number of frames of the monitoring system and should be recalculated at each new monitoring period. It may happen, when starting a new monitoring period, that this period will not start at the wanted time with respect to the looked for signal as required to perform like a continuous search. So, in order to guarantee that the wanted time falls into the new monitoring period, Rep_Time shall be adjusted in steps of monitoring system frames such that the wanted time is included;

b) N should be the maximum continuous monitoring period (expressed in number of frames of the monitoring system) leaving available the time needed to perform the other measures; the minimum value should be set in order to include a given number (arbitrarily selected) of occurrences of the looked for data starting from the wanted time; actually, N should be extended to include also the time difference between this wanted time and the above set value of Rep_Time in the current monitoring period.

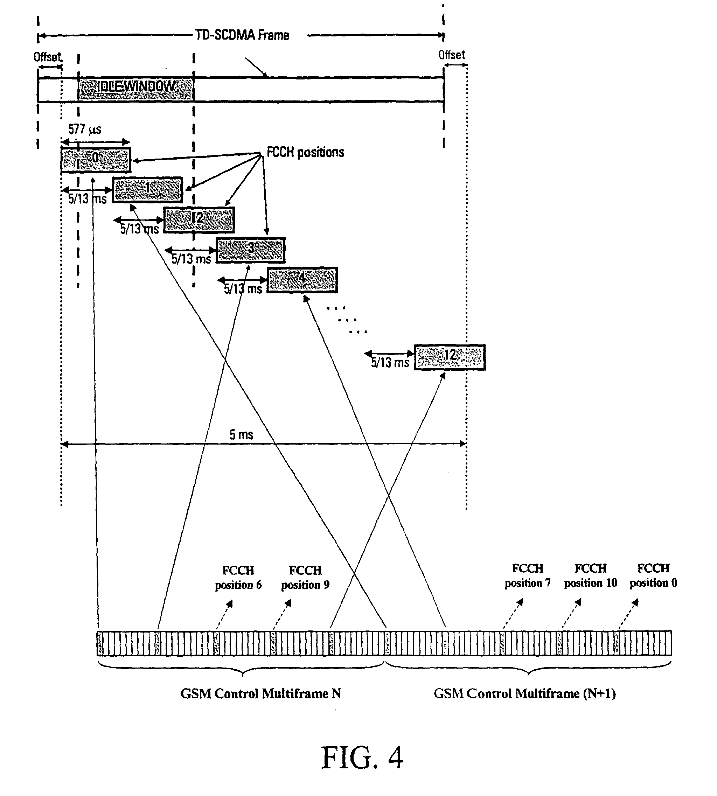

The algorithm summarised above will now be described in detail for the exemplary embodiment of FCCH search by a TD-SCDMA/GSM user equipment. For a better understanding, reference is made to Fig. 4, where two GSM control multiframes are shown.

The first FCCH burst within multiframe N will take, with respect to the TD-SCDMA frame, a position depending on the time offset ("Offset") between the two systems. Said position is considered as the first possible position of the FCCH burst relative to the TD-SCDMA frame and is labelled as position 0. To evaluate the subsequent relative positions assumed by the FCCH bursts, it has to be taken into account that two subsequent FCCH bursts are spaced by 10 or 11 GSM frames. By expressing the values of 10 and 11 GSM frame lengths in terms of the TD-SCDMA frame length, it can be immediately seen that:

$$10 \text{ GSM frames} = [9+(3/13)] \text{ TD-SCDMA frames} \qquad \text{(i)}$$

$$11 \text{ GSM frames} = [10+(2/13)] \text{ TD-SCDMA frames} \qquad \text{(ii)}$$

Relation (i) above, expressed modulo the TD-SCDMA frame length, indicates that the second FCCH burst of the GSM control multiframe N will take, with respect to the TD-SCDMA frame, a position being (3/13)5 ms forward compared to the one taken by the first FCCH burst of the same control multiframe. The position taken by this second FCCH burst is shown by burst "3" in Figure 4. The third, fourth and fifth bursts in multiframe are also spaced by 10 frames from the respective previous burst, and then they will each have a position (3/13)5 ms forward compared to that of the previous burst: such positions are denoted 6, 9, 12. Relation (i) allows calculating the positions of the last four FCCH bursts of any following control multiframe.

Similarly, relation (ii) allows calculating the positions of the first FCCH burst of control multiframe (N+1) and, generally, of the first FCCH burst of any following control multiframe. In particular, the first FCCH burst of control multiframe N+1 is (2/13)5 ms forward compared to the the last FCCH burst of the multiframe N, and hence (14/13)5 ms forward compared to the the first FCCH burst of the multiframe N: by expressing such time modulo the TD-SCDMA frame length, this means that said first FCCH burst of multiframe N+1 will take the position labelled as 1.

It can be readily seen that, once the time disalignment between the monitoring and monitored systems has been fixed, the FCCH burst can take only 13 different positions with respect to the monitoring system, and then with respect to the idle period position: two subsequent positions are then spaced by 5/13 ms.

The FCCH acquisition will be possible if and only if at least one of those 13 positions entirely falls into an available idle period. Meeting such condition depends on the idle period length and on the time offset between the two systems. The idle period length $L_{idle}$ has to be greater than a value $T_{min,1}$ including a full FCCH burst. As it has been supposed that an inter-frequency (and inter-system) measurement is performed, the following relation holds:

$$T_{min,1} = 2 \cdot T_{switch} + T_{FCCH} = 2 \cdot T_{switch} + (7.5/13) \text{ ms} \qquad \text{(iii)}$$

where $T_{switch}$ is the synthesiser switching time.

As to the time offset, Figure 4 shows that detection of the FCCH burst will be assured, apart from the actual value of the time disalignment, if and only if the idle period length is greater than a value $T_{min,2}$, given by:

$$T_{min,2} = T_{min,1} + 5/13 \text{ ms} = 2 \cdot T_{switch} + 12.5/13 \text{ ms} \qquad \text{(iv)}$$

where 5/13 ms is the minimum relative shift, within the idle period, of two FCCH positions.

On the whole, four different cases can occur:

- $L_{idle} < T_{min,1}$ : the FCCH acquisition is not possible;
- $T_{min,1} \leq L_{idle} < T_{min,2}$ and the disalignment is such that the idle period comprises at least one of the 13 different FCCH positions : the FCCH acquisition is guaranteed;
- $T_{min,1} \leq L_{idle} < T_{min,2}$ and the disalignment is such that there are no FCCH positions which falls into the idle period : the FCCH acquisition is not possible;
- $L_{idle} \geq T_{min,2}$: the FCCH acquisition is guaranteed whatever the value of the time disalignment.

Obviously an UE will try to acquire an FCCH burst using only idle windows whose lengths are greater than $T_{min,2}$.

To evaluate the time needed to acquire the FCCH burst in the second and fourth case , the order by which the 13 possible positions shown in Figure 4 are taken by subsequent FCCH bursts should be considered. By applying (i) and (ii) to the FCCH bursts of 28 subsequent GSM multiframes, the values reported in the following Table 1 are obtained.

TABLE 1.

| GSM Control Multiframe Number | Frame 0 (1st FCCH) | Frame 10 (2nd FCCH) | Frame 20 (3rd FCCH) | Frame 30 (4th FCCH) | Frame 40 (5th FCCH) |
|---|---|---|---|---|---|
| N | *0* | *3* | *6* | *9* | *12* |
| N+1 | *1* | *4* | *7* | *10* | *0* |
| N+2 | *2* | *5* | *8* | *11* | *1* |
| N+3 | *3* | *6* | *9* | *12* | *2* |
| N+4 | *4* | *7* | *10* | *0* | *3* |
| N+5 | *5* | *8* | *11* | *1* | *4* |
| N+6 | *6* | *9* | *12* | *2* | *5* |
| N+7 | *7* | *10* | *0* | *3* | *6* |
| N+8 | *8* | *11* | *1* | *4* | *7* |
| N+9 | *9* | *12* | *2* | *5* | *8* |
| N+10 | *10* | *0* | *3* | *6* | *9* |
| N+11 | *11* | *1* | *4* | *7* | *10* |
| N+12 | *12* | *2* | *5* | *8* | *11* |
| N+13 | 0 | 3 | 6 | 9 | 12 |
| N+14 | 1 | 4 | 7 | 10 | 0 |
| N+15 | 2 | 5 | 8 | 11 | 1 |
| N+16 | 3 | 6 | 9 | 12 | 2 |
| N+17 | 4 | 7 | 10 | 0 | 3 |
| N+18 | 5 | 8 | 11 | 1 | 4 |
| N+19 | 6 | 9 | 12 | 2 | 5 |
| N+20 | 7 | 10 | 0 | 3 | 6 |
| N+21 | 8 | 11 | 1 | 4 | 7 |
| N+22 | 9 | 12 | 2 | 5 | 8 |
| N+23 | 10 | 0 | 3 | 6 | 9 |
| N+24 | 11 | 1 | 4 | 7 | 10 |
| N+25 | 12 | 2 | 5 | 8 | 11 |
| N+26 | 0 | 3 | 6 | 9 | 12 |
| N+27 | 1 | 4 | 7 | 10 | 0 |

The Table allows drawing some preliminary conclusions.

First, the whole sequence of FCCH burst positions shows a 13-multiframe periodical structure with period 13 multiframes. This is shown by the two boxes in thicker lines enclosing the FCCH positions of GSM multiframes N to N+12 and N+13 to N+25, respectively. Moreover, groups of 14 subsequent FCCH bursts always take all 13 different positions, as indicated in bold Italic and underlined Italic, alternately. This implies that the maximum time interval between two subsequent occupations of the same position corresponds to 14 subsequent FCCHs.

The sequence of FCCH positions shown in Table 1 and the detected periodicity are exploited to perform in an efficient manner the discontinuous search so that it looks like a continuous search even if, of course, the acquisition time can be longer than in a continuous search.

In particular, being the time periodicity of the FCCH burst positions with respect to the monitoring TD-SCDMA idle periods 13 GSM control multiframes, i.e. 65 FCCH burst occurrences, if the monitoring is stopped at a given time, the search looks like a continuous one if resumption occurs after 13 GSM control multiframes, or integer multiples of 13 multiframes, later: e.g., if the search is stopped at position "9" in the GSM control multiframe N+3, it has to be resumed at position "12" in the GSM control multiframe N+16.

Moreover, if the groups of 14 subsequent FCCH bursts (which as said take all 13 possible positions with respect to the TD/SCDMA frame) are considered, it can be seen that subsequent groups include sequences of positions almost equal to each other: that is, the sequence of FCCH burst positions has, on the short period, a nearly periodical behaviour with a "nearly period" equal to 14 FCCH burst occurrences. Actually Table 1 shows that, when passing from a group of 14 FCCHs to the next one, at least 11 of the 14 positions stay unchanged. Thus, the search can be suspended for a time interval corresponding to the above-mentioned "nearly period" and resumed immediately after: the resulting discontinuous search still is quite similar to a continuous search and the acquisition is faster than when exploiting the exact periodicity of 13 GSM control multiframes.

Once determined that a search has to be suspended for a time corresponding to 14 FCCHs, the duration and the position of the search intervals has to be properly set. For sake of clarity, it will be assumed that the search periods comprise each at least four subsequent FCCHs and that about 40 ms every 240 ms are allotted to the power level measurements: thus, the length of a search period cannot exceed about 200 ms. As said, all values have then to be related to the timing of the monitoring system and then rounded to an integer number of TD-SCDMA frames.

Due to the variability of the spacing between subsequent FCCHs, the shortest time interval surely comprising at least 4 subsequent FCCHs lasts for 41 GSM frames plus 1 GSM time slot, that is 189,8076 ms. By rounding such value so that it corresponds to an integer number of TD-SCDMA frames, the smallest value that can be used as search interval length is 190 ms. As the search interval cannot be longer than 200 ms, other acceptable values could be 195 and 200 ms. In order to select the appropriate length of the search interval, the full algorithm provided by the present invention has to be taken into account. The steps to be followed in the FCCH search process are:

1. "Search" lasting for a time interval which ensures the arrival at receiving unit R of 4 subsequent FCCHs;
2. "No Search" corresponding to the arrival of 14 subsequent FCCH s at receiving unit R;
3. "Search" lasting for a time interval which ensures the arrival of other 4 subsequent FCCHs at receiving unit R; this new search starts after a "No search" period as defined in step 2, hence after 18 FCCH-to-FCCH intervals since the beginning of the previous search;
4. The steps indicated in 2) and 3) have to be repeated until the acquisition takes place.

The above process is illustrated in Tables 2 to 6 for the five possible different positions, in the GSM control multiframe, of the first FCCH (indicated by the label "start") comprised in a search interval including at least four FCCHs. The search intervals are enclosed within frames. The label "end" indicates the time instant at which, starting from the "start" position, the FCCH has taken up all 13 different positions. It can be seen that up to six search intervals (i. e. up to 24 FCCH occurrences) may be necessary to explore all 13 FCCH positions. Said acquisition will take place when the FCCH burst entirely falls into an available idle period on the TD-SCDMA frame during a search interval. Of course, once acquisition has taken place, the search is stopped so that the acquisition time can also be much shorter that the start-to-end interval. For instance, in the case depicted in Figure 4, where FCCH position 1 falls entirely into the idle window, acquisition will take place in the fourth search interval (GSM control multiframe N+11) if the situations shown in Tables 2 to 4 occur, and in the third interval (multiframe N+8) in the cases of tables 5 and 6. On the contrary, with the start position shown in Table 2, acquisition would take place just at the "end" position if FCCH position 8 is the one falling into the idle window, and would take place just at the "start" position if FCCH position 0 falls in the idle window.

It has to be noticed that five subsequent FCCH bursts instead of four could fall into a search interval; in this case it might happen that acquisition takes place earlier than depicted in Tables 2 to 6.

## TABLE 2

| GSM Control Multiframe Number | Frame 0 (1st FCCH) | Frame 10 (2nd FCCH) | Frame 20 (3rd FCCH) | Frame 30 (4th FCCH) | Frame 40 (5th FCCH) |
|---|---|---|---|---|---|
| N | 0 (start) | 3 | 6 | 9 | 12 |
| N+1 | 1 | 4 | 7 | 10 | 0 |
| N+2 | 2 | 5 | 8 | 11 | 1 |
| N+3 | 3 | 6 | 9 | 12 | 2 |
| N+4 | 4 | 7 | 10 | 0 | 3 |
| N+5 | 5 | 8 | 11 | 1 | 4 |
| N+6 | 6 | 9 | 12 | 2 | 5 |
| N+7 | 7 | 10 | 0 | 3 | 6 |
| N+8 | 8 | 11 | 1 | 4 | 7 |
| N+9 | 9 | 12 | 2 | 5 | 8 |
| N+10 | 10 | 0 | 3 | 6 | 9 |
| N+11 | 11 | 1 | 4 | 7 | 10 |
| N+12 | 12 | 2 | 5 | 8 | 11 |
| N+13 | 0 | 3 | 6 | 9 | 12 |
| N+14 | 1 | 4 | 7 | 10 | 0 |
| N+15 | 2 | 5 | 8 | 11 | 1 |
| N+16 | 3 | 6 | 9 | 12 | 2 |
| N+17 | 4 | 7 | 10 | 0 | 3 |
| N+18 | 5 | 8 (end) | 11 | 1 | 4 |
| N+19 | 6 | 9 | 12 | 2 | 5 |
| N+20 | 7 | 10 | 0 | 3 | 6 |
| N+21 | 8 | 11 | 1 | 4 | 7 |
| N+22 | 9 | 12 | 2 | 5 | 8 |
| N+23 | 10 | 0 | 3 | 6 | 9 |
| N+24 | 11 | 1 | 4 | 7 | 10 |
| N+25 | 12 | 2 | 5 | 8 | 11 |
| N+26 | 0 | 3 | 6 | 9 | 12 |

TABLE 3

| GSM Control Multiframe Number | Frame 0 (1st FCCH) | Frame 10 (2nd FCCH) | Frame 20 (3rd FCCH) | Frame 30 (4th FCCH) | Frame 40 (5th FCCH) |
|---|---|---|---|---|---|
| N | 0 | 3 (start) | 6 | 9 | 12 |
| N+1 | 1 | 4 | 7 | 10 | 0 |
| N+2 | 2 | 5 | 8 | 11 | 1 |
| N+3 | 3 | 6 | 9 | 12 | 2 |
| N+4 | 4 | 7 | 10 | 0 | 3 |
| N+5 | 5 | 8 | 11 | 1 | 4 |
| N+6 | 6 | 9 | 12 | 2 | 5 |
| N+7 | 7 | 10 | 0 | 3 | 6 |
| N+8 | 8 | 11 | 1 | 4 | 7 |
| N+9 | 9 | 12 | 2 | 5 | 8 |
| N+10 | 10 | 0 | 3 | 6 | 9 |
| N+11 | 11 | 1 | 4 | 7 | 10 |
| N+12 | 12 | 2 | 5 | 8 | 11 |
| N+13 | 0 | 3 | 6 | 9 | 12 |
| N+14 | 1 | 4 | 7 | 10 | 0 |
| N+15 | 2 | 5 (end) | 8 | 11 | 1 |
| N+16 | 3 | 6 | 9 | 12 | 2 |
| N+17 | 4 | 7 | 10 | 0 | 3 |
| N+18 | 5 | 8 | 11 | 1 | 4 |
| N+19 | 6 | 9 | 12 | 2 | 5 |
| N+20 | 7 | 10 | 0 | 3 | 6 |
| N+21 | 8 | 11 | 1 | 4 | 7 |
| N+22 | 9 | 12 | 2 | 5 | 8 |
| N+23 | 10 | 0 | 3 | 6 | 9 |
| N+24 | 11 | 1 | 4 | 7 | 10 |
| N+25 | 12 | 2 | 5 | 8 | 11 |
| N+26 | 0 | 3 | 6 | 9 | 12 |

TABLE 4

| GSM Control Multiframe Number | Frame 0 (1st FCCH) | Frame 10 (2nd FCCH) | Frame 20 (3rd FCCH) | Frame 30 (4th FCCH) | Frame 40 (5th FCCH) |
|---|---|---|---|---|---|
| N | 0 | 3 | 6 (start) | 9 | 12 |
| N+1 | 1 | 4 | 7 | 10 | 0 |
| N+2 | 2 | 5 | 8 | 11 | 1 |
| N+3 | 3 | 6 | 9 | 12 | 2 |
| N+4 | 4 | 7 | 10 | 0 | 3 |
| N+5 | 5 | 8 | 11 | 1 | 4 |
| N+6 | 6 | 9 | 12 | 2 | 5 |
| N+7 | 7 | 10 | 0 | 3 | 6 |
| N+8 | 8 | 11 | 1 | 4 | 7 |
| N+9 | 9 | 12 | 2 | 5 | 8 |
| N+10 | 10 | 0 | 3 | 6 | 9 |
| N+11 | 11 | 1 | 4 | 7 | 10 |
| N+12 | 12 | 2 | 5 | 8 | 11 |
| N+13 | 0 | 3 | 6 | 9 | 12 |
| N+14 | 1 | 4 | 7 | 10 | 0 |
| N+15 | 2 | 5 (end) | 8 | 11 | 1 |
| N+16 | 3 | 6 | 9 | 12 | 2 |
| N+17 | 4 | 7 | 10 | 0 | 3 |
| N+18 | 5 | 8 | 11 | 1 | 4 |
| N+19 | 6 | 9 | 12 | 2 | 5 |
| N+20 | 7 | 10 | 0 | 3 | 6 |
| N+21 | 8 | 11 | 1 | 4 | 7 |
| N+22 | 9 | 12 | 2 | 5 | 8 |
| N+23 | 10 | 0 | 3 | 6 | 9 |
| N+24 | 11 | 1 | 4 | 7 | 10 |
| N+25 | 12 | 2 | 5 | 8 | 11 |
| N+26 | 0 | 3 | 6 | 9 | 12 |

## TABLE 5

| GSM Control Multiframe Number | Frame 0 (1st FCCH) | Frame 10 (2nd FCCH) | Frame 20 (3rd FCCH) | Frame 30 (4th FCCH) | Frame 40 (5th FCCH) |
|---|---|---|---|---|---|
| N | 0 | 3 | 6 | 9 (start) | 12 |
| N+1 | 1 | 4 | 7 | 10 | 0 |
| N+2 | 2 | 5 | 8 | 11 | 1 |
| N+3 | 3 | 6 | 9 | 12 | 2 |
| N+4 | 4 | 7 | 10 | 0 | 3 |
| N+5 | 5 | 8 | 11 | 1 | 4 |
| N+6 | 6 | 9 | 12 | 2 | 5 |
| N+7 | 7 | 10 | 0 | 3 | 6 |
| N+8 | 8 | 11 | 1 | 4 | 7 |
| N+9 | 9 | 12 | 2 | 5 | 8 |
| N+10 | 10 | 0 | 3 | 6 | 9 |
| N+11 | 11 | 1 | 4 | 7 | 10 |
| N+12 | 12 | 2 | 5 | 8 | 11 |
| N+13 | 0 | 3 | 6 | 9 | 12 |
| N+14 | 1 | 4 | 7 | 10 | 0 |
| N+15 | 2 | 5 (end) | 8 | 11 | 1 |
| N+16 | 3 | 6 | 9 | 12 | 2 |
| N+17 | 4 | 7 | 10 | 0 | 3 |
| N+18 | 5 | 8 | 11 | 1 | 4 |
| N+19 | 6 | 9 | 12 | 2 | 5 |
| N+20 | 7 | 10 | 0 | 3 | 6 |
| N+21 | 8 | 11 | 1 | 4 | 7 |
| N+22 | 9 | 12 | 2 | 5 | 8 |
| N+23 | 10 | 0 | 3 | 6 | 9 |
| N+24 | 11 | 1 | 4 | 7 | 10 |
| N+25 | 12 | 2 | 5 | 8 | 11 |
| N+26 | 0 | 3 | 6 | 9 | 12 |

TABLE 6

| GSM Control Multiframe Number | Frame 0 (1st FCCH) | Frame 10 (2nd FCCH) | Frame 20 (3rd FCCH) | Frame 30 (4th FCCH) | Frame 40 (5th FCCH) |
|---|---|---|---|---|---|
| N | 0 | 3 | 6 | 9 | 12 (start) |
| N+1 | 1 | 4 | 7 | 10 | 0 |
| N+2 | 2 | 5 | 8 | 11 | 1 |
| N+3 | 3 | 6 | 9 | 12 | 2 |
| N+4 | 4 | 7 | 10 | 0 | 3 |
| N+5 | 5 | 8 | 11 | 1 | 4 |
| N+6 | 6 | 9 | 12 | 2 | 5 |
| N+7 | 7 | 10 | 0 | 3 | 6 |
| N+8 | 8 | 11 | 1 | 4 | 7 |
| N+9 | 9 | 12 | 2 | 5 | 8 |
| N+10 | 10 | 0 | 3 | 6 | 9 |
| N+11 | 11 | 1 | 4 | 7 | 10 |
| N+12 | 12 | 2 | 5 | 8 | 11 |
| N+13 | 0 | 3 | 6 | 9 | 12 |
| N+14 | 1 | 4 | 7 | 10 | 0 |
| N+15 | 2 | 5 | 8 | 11 | 1 |
| N+16 | 3 | 6 | 9 | 12 | 2 |
| N+17 | 4 | 7 | 10 | 0 | 3 |
| N+18 | 5 | 8 | 11 | 1 | 4 |
| N+19 | 6 | 9 (end) | 12 | 2 | 5 |
| N+20 | 7 | 10 | 0 | 3 | 6 |
| N+21 | 8 | 11 | 1 | 4 | 7 |
| N+22 | 9 | 12 | 2 | 5 | 8 |
| N+23 | 10 | 0 | 3 | 6 | 9 |
| N+24 | 11 | 1 | 4 | 7 | 10 |
| N+25 | 12 | 2 | 5 | 8 | 11 |
| N+26 | 0 | 3 | 6 | 9 | 12 |

Some aspects concerning rounding will now be discussed. Let $D_{FCCH}$ be the distance existing on the time axis between the start of two subsequent FCCH bursts, i. e. 10 or 11 GSM frames. The starting points of subsequent search intervals are spaced by $18 \cdot D_{FCCH}$ periods, corresponding to either 183 or 184 GSM frames (that is either 849.23 or 844.615 ms, see also Table 7, where the number between parentheses in columns 1 and 2 is the control multiframe number.

TABLE 7

| Initial FCCH position | FCCH position after 18 FCCH-FCCH jumps | Number of jumps by 10 GSM frames | Number of jumps by 11 GSM frames | Interval between two searches |
|---|---|---|---|---|
| 0 (N) | 30 (N+3) | 15 | 3 | 183 (844.615) |
| 10 (N) | 40 (N+3) | 15 | 3 | 183 (844.615) |
| 20 (N) | 0 (N+4) | 14 | 4 | 184 (849.23) |
| 30 (N) | 10 (N+4) | 14 | 4 | 184 (849.23) |
| 40 (N) | 20 (N+4) | 14 | 4 | 184 (849.23) |

Considering for instance the case corresponding to Table 2, Table 7 shows that the time distance existing between the first FCCH bursts belonging to the highlighted 6 subsequent search intervals is respectively:

- 844.615 ms (jump from the first FCCH burst of control multiframe N to the fourth one of control multiframe N+3),
- 849.23 ms (jump from the fourth FCCH burst of control multiframe N+3 to the second one of control multiframe N+7),
- 844.615 ms (jump from the second FCCH burst of control multiframe N+7 to the fifth one of control multiframe N+10),
- 849.23 ms (jump from the fifth FCCH burst of control multiframe N+10 to the third one of control multiframe N+14),
- 849.23 ms (jump from the third FCCH burst of control multiframe N+14 to the first one of control multiframe N+18).

From the first FCCH burst of the control multiframe N+18 onwards, the distances take again the same values.
Similarly, for Tables 3 to 6 the sequences are respectively (all values in ms):

Table 3: 844.615; 849.23; 849.23; 844.615; 849.23;
Table 4: 849.23; 844.615; 849.23; 844.615; 849.23;
Table 5: 849.23; 844.615; 849.23; 849.23; 844.615;
Table 6: 849.23; 849.23; 844.615; 849.23; 844.615.

This means that the process implies:

1. jumps whose sizes are time variant;
2. jumps whose sizes depend on the position of the first search interval with respect to the GSM control multiframe.

The dependence expressed in item 2) cannot be performed: in fact, when starting an FCCH burst acquisition, the timing of the search interval with respect to the GSM monitored control multiframe is not known. So, the sequence of jumps (between the beginning of subsequent search intervals) must be the same independently of the actual position of the search intervals with respect to the GSM control multiframe. Concerning item 1) more than one choice could be considered. First, as said, the values 844.615 and 849.23 have to be rounded in order to correspond to an integer number of TD-SCDMA frames. It is immediate to think of 845 and 850 ms (129 and 130 TD-SCDMA frames), respectively. Second, it is impossible to select a sequence of jumps which fulfils at the same time the five above reported sequences. However, a solution to the need of tracking five different jump sequences by using a single jump sequence could be suitably increasing the length of each search interval. In fact, in presence of search intervals of which the relative distances do not exactly correspond to the distances of groups of four subsequent FCCH bursts, a continuous slip of the search intervals with respect to the groups of four FCCH bursts will take place. As the FCCH burst acquisition will take place in 6 subsequent search intervals or it will never take place, the evaluation of the amount of the maximum slip can be bounded to the corresponding subsequent five jumps. By taking a search period exceeding that strictly necessary by an amount equal to the maximum slip, the effect of the slip will be cancelled.
In the present case, the length of each search interval has to be longer than or equal to 189,8076 ms. Because of the just above done reasoning, the actual search interval $T_{S4}$ has to be $T_{S4} = (189,8076 + \Delta)$ ms, with $\Delta > 0$ and such that $T_{S4}$ be an integer multiple of 5 ms. As above stated, the value of $\Delta$ depends on the desired distance between the beginning of subsequent search intervals (jumps). In the following, it is assumed that the receiving unit performs the jump sequence: 845 ms, 850 ms, 845 ms, 850 ms, 850 ms. By choosing a value of $\Delta$ greater than the above-mentioned slip, any group of 4 subsequent FCCH bursts will entirely fall into the search intervals. It is possible to show that a value $\Delta \geq 7.31$ ms allows satisfying the above requirements. Thus, the search interval should last at least $T_{S4} =$

189,8076 + 7.31 ms = 197.1176 ms. So, the first acceptable value is $T_{S4}$ = 200 ms (40 TD-SCDMA frames).

With $T_{S4}$ = 200 ms and the above jump sequence, the resulting management of the idle periods is the following: 200 ms (40 TD-SCDMA frames) search, 645 ms (129 TD-SCDMA frames) no search, 200 ms search, 650 ms (130 TD-SCDMA frames) no search, 200 ms search, 645 ms no search, 200 ms search, 650 ms no search, 200 ms search and finally 650 ms no search. The search-no search pattern is then repeated unchanged.

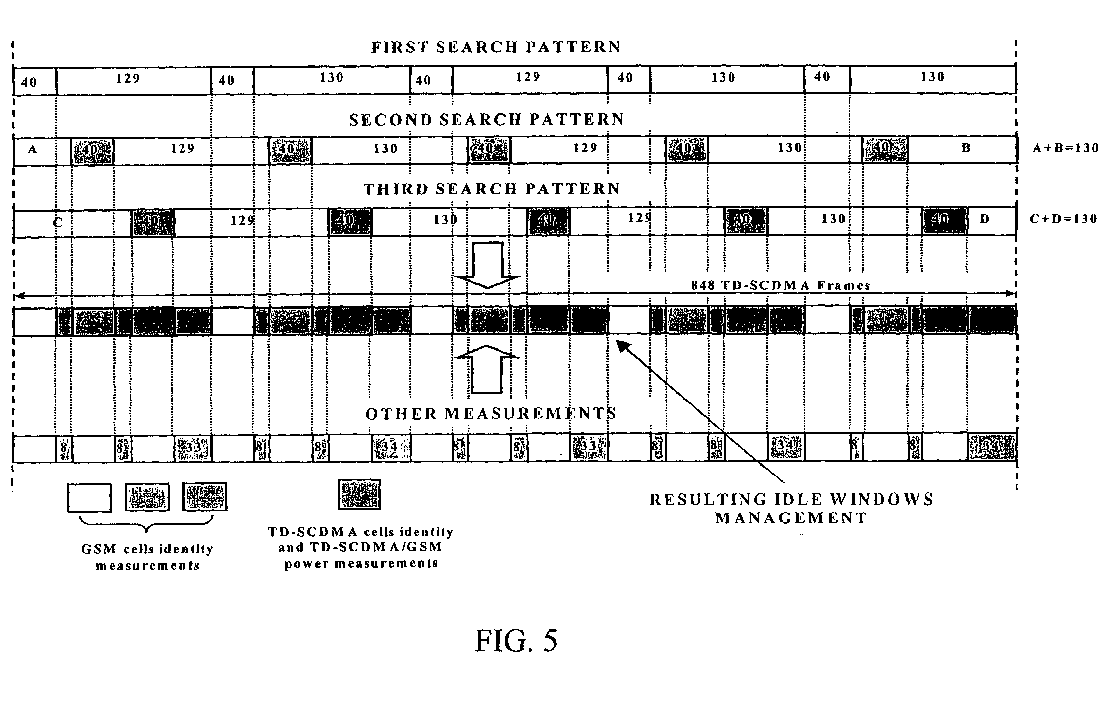

The scheduling of the measurements set by the TD-SCDMA/GSM specifications would allow however resuming the search at the 240th ms. The time interval from the 240th to the 845th ms can then be used for monitoring other units in group U1...Un (Fig. 1) by using the above described strategy. Figure 6 shows such a possibility. In particular, up to three parallel and independent search patterns can be set up. The row labelled "first search pattern" corresponds to the just described sequence; rows "second search pattern" and "third search pattern" are the search/no-search patterns for FCCH acquisition from two other transmitting units. The lengths of the intervals are indicated in Figure 5 in terms of TD-SCDMA frames. The Figure also shows, in the row labelled "Resulting idle windows management", in which the three search pattern are combined, the intervals devoted to the power level measurements after each search period. It can be also seen that the time interval available after the third search pattern is somewhat longer than the 8 frames required for the power level measurements, but is insufficient to allow setting up a fourth search pattern. It can be used to perform still other measurements, for instance acquisition of TD-SCDMA cell identities.

It is clear that the above description is given only by way of non limiting example and that changes and modifications can be made without departing from the scope of the invention as defined in the appended claims.

In particular, a search interval comprising groups of four subsequent FCCH bursts has been chosen. This choice leads to a search interval lasting for about 200 ms and then to a time interval of about 40 ms to perform other measurements. However, if 40 ms would not be enough, a search interval having shorter length, for instance a search interval comprising groups of three subsequent FCCH bursts, could be considered. The corresponding value of $\Delta$ can be calculated following a reasoning similar to the previous one. Moreover, all the reasoning made for the GSM/TD-SCDMA multimode UE can be generalised and applied to all cases in which a unit engaged in a service (e. g. a speech communication) has to acquire an information burst characterised by a known law of presentation, without stopping transmission and reception of the information relevant to said service but using well defined idle windows not used for the service. Thus a service quality degradation is avoided. This law of presentation can be expressed by means of a table similar to Table 1. A particular case is given by a periodical or nearly periodical repetition rule but, in general terms, it is enough that the presentation rule is known. Starting from this, it is possible to select the positions and lengths of the search intervals within which a defined pool of idle periods will be used to try to obtain the acquisition. This selection has to be carried out by keeping in mind that:

- subsequent search intervals have to correspond as much as possible to different positions taken by the burst of data to be acquired with respect to the available idle periods within the monitoring frame; in other words a search interval should correspond as much as possible to time intervals in which there is the highest the probability, given the previous searches, to find the wanted information;
- possible constraints due to the need for scheduling other measurements could lead to a rearrangement of the search intervals;
- due to the different time scales in the monitoring and the monitored systems, it could be necessary to make provision for an increase of the search intervals as calculated in the two previous steps;
- in case the no-search intervals calculated at the steps 1), 2) and 3) are long enough, more logically separated searches can be set up at the same time using the same monitoring resources (idle periods).

## Claims

**1.** A method to detect at a receiving unit (R, R') of a third generation cellular communication system operating according to a first time scale at least a signalling burst (FCCH, SCH) broadcast by at least one transmitting unit (U1, U2...Un) of a monitored GSM system operating according to a second time scale different from and asynchronous with respect to the first one, wherein:

- the operation of said receiving unit (R, R') is organised in periodically repeating frames comprising respective idle windows, to be used at least partly for said detecting,
- said signalling burst corresponding to the content of either the frequency control channel (FCCH) or the synchronisation channel (SCH) is presented by said at least one transmitting unit (U1, U2...Un) according to a predetermined time scheduling such that the signalling burst (FCCH, SCH) can take a limited number of positions with respect to an idle window,
- said receiving unit (R, R') is monitoring the signal received during idle windows of a plurality of subsequent frames to detect the presence of said signalling burst (FCCH, SCH), and

- said monitoring has to be temporarily suspended in order to allow the receiving unit (R) to perform also additional tasks during said idle windows,

**characterised in that** the method comprises the steps of:

a) defining a first time interval in which said signalling burst (FCCH, SCH) takes at least once all possible positions with respect to an idle window (IW);

b) defining a second time interval not exceeding a time allowed to the receiving unit (R) for said monitoring;

c) performing said monitoring during the second time interval and suspending it at the end;

d) starting the execution of said other tasks for a third time interval having a duration corresponding to said first time interval, then resuming said monitoring whereby at each new second interval the monitoring substantially considers only positions of said signalling burst that have not been considered during a previous second interval;

e) repeating steps c) and d) until said signalling burst is fully included into the idle window and can be detected, consequently.

2. A method as claimed in claim 1, wherein said positions are periodically repeated, and said third time interval corresponds to a period of repetition of said positions.

3. A method as claimed in claim 1 or 2, wherein each period of repetition of said positions includes a plurality of said first time intervals such that the patterns of positions in adjacent intervals differ only in respect of a minor number of positions, and the third time interval corresponds to one of said intervals.

4. A method as claimed in any claims 1 to 3, wherein each second time interval includes a plurality of occurrences of said signalling burst (FCCH, SCH).

5. A method as claimed in any claims 1 to 4, wherein said second time interval and said third time interval are rounded so as to correspond to an integer number of frames of operation of the receiving unit (R, R').

6. A method as claimed in claim 5, wherein the schedule of occurrence of said signalling burst (FCCH, SCH) is such that the lengths of the second and third time intervals are time variant and depend on the position of the first occurrence of said signalling burst after the monitoring start, and wherein, before said rounding, the duration of a second time interval is increased by an amount allowing compensating slips of the second time intervals with respect to the positions of said signalling burst (FCCH, SCH).

7. A method according to any preceding claim, wherein during said third time intervals the receiving unit (R, R') performs a monitoring of signaling bursts (FCCH, SCH) transmitted by at least another transmitting unit (U1...Un) also operating according to a time scale different from and asynchronous with respect to the first one

8. A method according to claim 7, wherein also the monitoring of signalling bursts (FCCH, SCH) transmitted by said at least another transmitting unit (U1...Un) is temporarily suspended to allow the receiving unit (R, R') to perform the additional tasks.

9. A method according to any preceding claims, wherein the receiving unit (R, R') is a unit having handover capability to the monitored system.

10. A method according to any preceding claims, wherein the receiving unit (R, R') is a TD-SCDMA/GSM dual mode user equipment working in TD-SCDMA connected mode, said at least one and at least another transmitting units (U1...Un) are GSM base transceiver stations.

**Patentansprüche**

1. Ein Verfahren, nach dem an einer Empfangseinheit (R, R') in einem Mobilfunksystem der dritten Generation, das gemäß einem ersten Zeitplan arbeitet, mindestens ein Signalisierungs-Burst (FCCH, SCH) erkannt werden kann, das von mindestens einer Sendeeinheit (U1, U2...Un) eines überwachten GSM-Systems, welches nach einem zweiten, von dem ersten verschiedenen und zu diesem asynchronen Zeitplan arbeitet, ausgestrahlt wird, **gekenn-**

**zeichnet dadurch, dass**:

- der Betrieb besagter Empfangseinheit (R, R') in sich periodisch wiederholende Rahmen gegliedert ist, die jeweils Ruhefenster enthalten, von denen mindestens ein Teil für die besagte Erkennung genutzt wird,
- besagtes Signalisierungs-Burst dem Inhalt entweder des Frequenzkorrektur- (FCCH) oder des Synchronisationskanals (SCH) entspricht und von mindestens einer der besagten Sendeeinheiten (U1, U2...Un) gemäß einem vorab definierten Zeitplan derart ausgestrahlt wird, dass das Signalisierungs-Burst (FCCH, SCH) bezogen auf ein Ruhefenster lediglich eine eingeschränkte Anzahl unterschiedlicher Positionen einnehmen kann,
- besagte Empfangseinheit (R, R') das Eingangssignal während einer Reihe von aufeinander folgenden Ruhefenstern überwacht, um das Vorhandensein des besagten Signalisierungs-Burst (FCCH, SCH) zu erkennen, und
- besagte Überwachung zeitweise unterbrochen werden muss, damit die Empfangseinheit (R) innerhalb der besagten Ruhefenster zusätzliche Aufgaben ausführen kann,

sowie weiterhin **dadurch gekennzeichnet, dass** das Verfahren folgende Schritte umfasst:

a) Definition eines ersten Zeitintervalls, in dem besagtes Signalisierungs-Burst (FCCH, SCH) mindestens einmal jede der möglichen Positionen bezogen auf ein Ruhefenster (IW) einnimmt;

b) Definition eines zweiten Zeitintervalls, das eine bestimmte, der Empfangseinheit (R) für besagte Überwachung zugestandene Länge nicht überschreitet;

c) Durchführung der besagten Überwachung innerhalb des besagten zweiten Intervalls sowie Unterbrechung der Überwachung am Ende des Intervalls;

d) Beginn der Ausführung besagter weiterer Aufgaben für ein drittes Zeitintervall, dessen Länge dem besagten ersten Zeitintervall entspricht, sowie die anschließende Wiederaufnahme besagter Überwachung, wobei in jedem weiteren der besagten zweiten Intervalle für die Überwachung im Wesentlichen nur Positionen des besagten Signalisierungs-Burst berücksichtigt werden, die in einem entsprechenden vorherigen Intervall nicht abgesucht wurden;

e) Wiederholung der Schritte c) und d), bis besagtes Signalisierungs-Burst vollständig in das Ruhefenster fällt und somit erkannt wird.

2. Ein Verfahren gemäß Anspruch 1, bei dem sich besagte Positionen periodisch wiederholen und besagtes drittes Zeitintervall einem Zeitraum der Wiederholung dieser besagten Positionen entspricht.

3. Ein Verfahren gemäß Anspruch 1 oder 2, in dem jeder Zeitraum der Wiederholung besagter Positionen eine Anzahl besagter erster Zeitintervalle dergestalt enthält, dass die Muster der Positionen in benachbarten Intervallen lediglich in einer kleineren Anzahl Positionen differieren und das besagte dritte Intervall einem der besagten Intervalle entspricht.

4. Ein Verfahren gemäß einem der Ansprüche 1 bis 3, bei dem jedes der besagten zweiten Zeitintervalle eine Anzahl Vorkommnisse des besagten Signalisierungs-Burst (FCCH, SCH) beinhaltet.

5. Ein Verfahren gemäß einem der Ansprüche 1 bis 4, bei dem besagtes zweites und besagtes drittes Zeitintervall gerundet werden, so dass sie einer ganzzahligen Anzahl Rahmen der Empfangseinheit (R, R') entsprechen.

6. Ein Verfahren gemäß Anspruch 5, bei dem der Zeitplan für das Vorkommen des besagten Signalisierungs-Burst (FCCH, SCH) so gestaltet ist, dass die zweiten und dritten Zeitintervalle zeitlich unterschiedlich sind und von der Position des ersten Vorkommnisses des besagten Signalisierungs-Burst nach Beginn der Überwachung abhängen, und bei dem vor besagter Rundung die Dauer eines zweiten Zeitintervalls um einen Betrag erhöht wird, durch den Verschiebungen des zweiten Intervalls bezogen auf die Positionen des besagten Signalisierungs-Burst (FCCH, SCH) kompensiert werden.

7. Ein Verfahren gemäß einem der vorstehenden Ansprüche, in dem während der Dauer der besagten dritten Zeitintervalle die Empfangseinheit (R, R') die Signalisierungs-Bursts (FCCH, SCH) überwacht, die von mindestens einer anderen Sendeeinheit (U1...Un) ausgestrahlt werden, die ebenfalls nach einem von dem ersten verschiedenen und zu diesem asynchronen Zeitplan arbeitet.

8. Ein Verfahren gemäß Anspruch 7, bei dem auch die Überwachung der Signalisierungs-Bursts (FCCH, SCH) von besagter mindestens einer anderen Sendeeinheit (U1...Un) zeitweise ausgesetzt wird, damit die Empfangseinheit (R, R') zusätzliche Aufgaben ausführen kann.

**9.** Ein Verfahren gemäß einem der vorstehenden Ansprüche, bei dem die Empfangseinheit (R, R') die Möglichkeit des Handover an das überwachte System bietet.

**10.** Ein Verfahren gemäß einem der vorstehenden Ansprüche, bei dem die Empfangseinheit (R, R') ein Dual Mode TD-SCDMA/GSM-Teilnehmergerät ist, das im TD-SCDMA-Verbindungsmodus arbeitet, und besagte mindestens eine Sendeeinheit und mindestens eine andere Sendeeinheit (U1...Un) GSM-BTS (Base Transceiver Stations, Basis-Sende-/Empfangsstationen) sind.

**Revendications**

**1.** Procédé pour détecter, au niveau d'une unité de réception (R, R') d'un système de télécommunications cellulaire de troisième génération fonctionnant selon une première échelle de temps, au moins une salve de signalisation (FCCH, SCH) diffusée par au moins une unité d'émission (U1, U2...Un) d'un système GSM surveillé fonctionnant selon une seconde échelle de temps différente de, et asynchrone par rapport à, la première, dans lequel :

- le fonctionnement de ladite unité de réception (R, R') est organisé en trames à répétition périodique comprenant des fenêtres d'inactivité respectives, à utiliser au moins en partie pour ladite détection ;
- ladite salve de signalisation correspondant au contenu soit de la voie de commande de fréquence (FCCH), soit de la voie de synchronisation (SCH), est présentée par ladite au moins une unité d'émission (U1, U2...Un) selon une chronologie prédéterminée de telle sorte que la salve de signalisation (FCCH, SCH) peut occuper un nombre limité de positions par rapport à une fenêtre d'inactivité ;
- ladite unité de réception (R, R') surveille le signal reçu durant les fenêtres d'inactivité d'une pluralité de trames consécutives pour détecter la présence de ladite salve de signalisation (FCCH, SCH), et
- ladite surveillance doit être temporairement suspendue afin de permettre à l'unité de réception (R) d'effectuer aussi des tâches additionnelles durant lesdites fenêtres d'inactivité,

**caractérisé en ce que** le procédé comprend les étapes consistant à :

a) définir un premier intervalle de temps dans lequel ladite salve de signalisation (FCCH, SCH) occupe au moins une fois toutes les positions possibles par rapport à une fenêtre d'inactivité (IW) ;
b) définir un deuxième intervalle de temps n'excédant pas un temps alloué à l'unité de réception (R) pour ladite surveillance ;
c) exécuter ladite surveillance durant le deuxième intervalle de temps et la suspendre à la fin ;
d) commencer à exécuter lesdites autres tâches pendant un troisième intervalle de temps ayant une durée correspondant audit premier intervalle de temps, puis reprendre ladite surveillance, ce par quoi à chaque nouveau deuxième intervalle, la surveillance prend en considération autant dire uniquement les positions de ladite salve de signalisation qui n'ont pas été prises en considération durant un deuxième intervalle précédent ;
e) répéter les étapes c) et d) jusqu'à ce que ladite salve de signalisation soit complètement incluse dans la fenêtre d'inactivité et puisse être détectée, en conséquence.

**2.** Procédé selon la revendication 1, dans lequel lesdites positions sont répétées périodiquement et ledit troisième intervalle de temps correspond à une période de répétition desdites positions.

**3.** Procédé selon la revendication 1 ou 2, dans lequel chaque période de répétition desdites positions comprend une pluralité desdits premiers intervalles de temps de telle sorte que les séquences de positions dans des intervalles adjacents diffèrent seulement quant à un petit nombre de positions, et le troisième intervalle de temps correspond à l'un desdits intervalles.

**4.** Procédé selon l'une quelconque des revendications 1 à 3, dans lequel chaque deuxième intervalle de temps comprend une pluralité d'occurrences de ladite salve de signalisation (FCCH, SCH).

**5.** Procédé selon l'une quelconque des revendications 1 à 4, dans lequel ledit deuxième intervalle de temps et ledit troisième intervalle de temps sont arrondis de sorte à correspondre à un nombre entier de trames d'exploitation de l'unité de réception (R, R').

**6.** Procédé selon la revendication 5, dans lequel la chronologie d'occurrence de ladite salve de signalisation (FCCH, SCH) est telle que les longueurs des deuxième et troisième intervalles de temps varient dans le temps et dépendent de la position de la première occurrence de ladite salve de signalisation après le début de la surveillance, et dans lequel, avant ledit arrondi, la durée d'un deuxième intervalle de temps est augmentée d'une quantité autorisant des glissements de compensation des deuxièmes intervalles de temps par rapport aux positions de ladite salve de signalisation (FCCH, SCH).

**7.** Procédé selon l'une quelconque des revendications précédentes, dans lequel durant lesdits troisièmes intervalles de temps, l'unité de réception (R, R') effectue une surveillance de salves de signalisation (FCCH, SCH) émises par au moins une autre unité d'émission (U1...Un) fonctionnant aussi selon une échelle de temps différente de, et asynchrone par rapport à, la première.

**8.** Procédé selon la revendication 7, dans lequel la surveillance des salves de signalisation (FCCH, SCH) émises par ladite au moins une autre unité d'émission (U1...Un) est aussi temporairement suspendue pour permettre à l'unité de réception (R, R') d'exécuter les tâches additionnelles.

**9.** Procédé selon l'une quelconque des revendications précédentes, dans lequel l'unité de réception (R, R') est une unité possédant une capacité de transfert vers le système surveillé.

**10.** Procédé selon l'une quelconque des revendications précédentes, dans lequel l'unité de réception (R, R') est un équipement d'abonné à double mode TD-SCDMA/GSM fonctionnant en mode connecté TD-SCDMA, lesdites au moins une et au moins une autre unités d'émission (U1...Un) sont des stations émettrices-réceptrices de base GSM.

R'

$I_R$

Monitoring Unit

R

U1

Monitored Unit

$I_{U1}$

U2

$I_{U2}$ Monitored Unit

.
.
.

Un

$I_{Un}$

Monitored Unit

## FIG. 1

$F_R1$ ($T_{FR}$ = 5 ms)

U | IW | D

L1

$F_RX$ ($T_{FR}$ = 5 ms)

U | IW | D

Lx

## FIG. 2

GSM 51 CONTROL MULTIFRAME

0 1    10 11    20 21    30 31    40 41    50 0 1

Slot 0

FCCH    SCH

GSM frame 0    GSM frame 1

## FIG. 3

FIG. 4

FIRST SEARCH PATTERN

| 40 | 129 | 40 | 130 | 40 | 129 | 40 | 130 | 40 | 130 |

SECOND SEARCH PATTERN

| A | 40 | 129 | 40 | 130 | 40 | 129 | 40 | 130 | 40 | B | A+B=130

THIRD SEARCH PATTERN

| C | 40 | 129 | 40 | 130 | 40 | 129 | 40 | 130 | 40 | D | C+D=130

848 TD-SCDMA Frames

OTHER MEASUREMENTS

| 8 | 8 | 33 | 8 | 8 | 34 | 8 | 8 | 33 | 8 | 8 | 34 | 8 | 8 | 34 |

GSM cells identity
measurements

TD-SCDMA cells identity
and TD-SCDMA/GSM
power measurements

RESULTING IDLE WINDOWS
MANAGEMENT

FIG. 5

EP 1 303 152 B1